# EUROPEAN PATENT APPLICATION

(11) **EP 0 755 977 A2**
(43) Date of publication of application: **29.01.1997**
(21) Application number: 96305164.4
(22) Date of filing: 12.07.1996
(51) Int. Cl.: C08L 69/00

(54) **Flame resistant compositions of polycarbonate and monovinylidene aromatic compounds**

(30) Priority: 26.07.1995 US 507072
(71) Applicant: GENERAL ELECTRIC COMPANY, Schenectady, NY 12345 (US)
(72) Inventor: Liu, Chang Feng, Delmar, New York 12054 (US)
(74) Representative: Szary, Anne Catherine

(57) **Abstract**

A flame resistant moldable thermoplastic resin composition comprising a thermoplastic resin blend of a polycarbonate resin, a monovinylidene aromatic compound and a small amount of a phosphate flame retardant wherein the polycarbonate has a low molecular weight and the monovinylidene aromatic compound as well as the overall composition has a relatively low rubber content. The composition has a unique combination of high heat deflection temperature, good impact resistance, excellent flame retardancy, good flow for easier processing and does not edge crack.

## Description

The present invention relates to flame resistant polymer compositions for molding applications which polymer composition comprises a thermoplastic molding resin comprising a blend of polycarbonate resin and a monovinylidene aromatic compound, a phosphate flame retardant compound, and optionally a tetrafluoroethylene polymer. The present invention also relates to methods of flame retarding thermoplastic resin compositions and to articles molded with the composition of this invention.

The prior art has disclosed the use of phosphates as flame retardants for polymers or thermoplastic molding resins particularly such monophosphates as triphenyl phosphate, tricresyl phosphate, diphenylcresyl phosphate and the like. Such monophosphate esters tend to migrate to the surface when the thermoplastic composition is molded such as injection molding causing so called "juicing." Juicing is where the additive migrates to the surface of the molded article during molding. A secondary adverse affect which accompanies juicing is the formation of cracks on the surface of the molded resin which is largely a result of the juiced flame retardant compound chemically attacking the base resin composition.

Also, in order to obtain good flame retardancy, often other flame retardants are employed with the monophosphate esters, particularly halogen containing flame retardants. Halogen flame retardants are undesirable because of the environment concerns and the pitting of the mold surface. On the other hand, if high concentrations of the particular phosphate esters are employed a decrease in heat resistance and impact resistance can result.

Gosens et al. (U.S. Patent 5,204,394) discloses a composition of an aromatic polycarbonate, a styrene containing copolymer such as acrylonitrile-butadiene-styrene (ABS) and oligomeric phosphate flame retardants. The patent further discloses that the oligomeric phosphate employed therein may be a blend of several different oligomers (Column 4, lines 46-66).

However, for successful commercial application in areas such as monitor housings, notebook computers, laser beam printers and other business equipment, it is not enough merely to improve flame retardancy and eliminate juicing. Rather, the thermoplastic resin needs to maintain good impact properties, good flow properties and have a high heat deflection temperature (HDT).

Therefore, the object of the present invention is to provide a thermoplastic molding composition having good flame retardant properties without the use of halogenated flame retardant which maintains a good overall balance of properties.

A further object of the present invention is to provide a flame resistant composition having good heat deflection temperature and good impact resistance.

Another object of the present invention is to provide a flame resistant molded thermoplastic article prepared from the composition of this invention which does not experience juicing and/or edge cracking of the molded part.

These and other objects of this invention will become apparent from the following description of this invention.

### SUMMARY OF THE INVENTION

This invention is directed to a thermoplastic resin molding composition having excellent flame retardant properties using a non halogenated flame retardant while maintaining good mechanical properties such as heat deflection temperature, impact resistance and flow. Specifically the thermoplastic resin composition is a blend of polycarbonate resin and a monovinylidene aromatic compound and the flame retardant employed herein is a phosphate flame retardant.

### DETAILED DESCRIPTION OF THE INVENTION

As stated previously, the invention is directed to a flame resistant thermoplastic molding composition and to articles molded therefrom. The flame resistant thermoplastic molding composition comprises a blend of polycarbonate resin and a monovinylidene aromatic compound and a phosphate flame retardant additive, optionally with a tetrafluoroethylene polymer. The phosphate employed herein is preferably represented by the following formula (I): 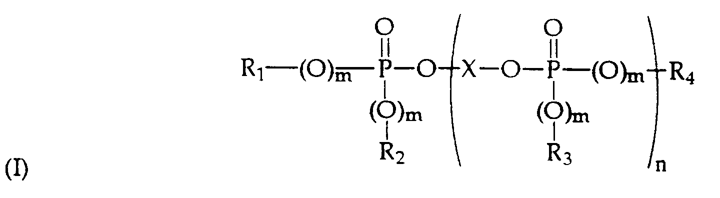 wherein R₁, R₂, R₃ and R₄ are independently selected from the group consisting of an aryl or an alkaryl group, X is an arylene group, each m is independently 0 or 1. The phosphate can be a low molecular weight phosphate such as an oligomeric phosphate wherein n is an integer of from 1 to 5 in which case the molecular weight of the phosphate is at least about 500 and preferable about 500 to about 2000. The phosphate can also be a higher molecular weight phosphate such as a polymeric phosphate wherein n is an integer of from 6 to 35 or more, in which case the molecular weight is at least about 2300 and preferable about 2300 to about 11,000. Alternatively, the phosphate can be a mixture of any of the phosphates listed above.

In the above formula for the phosphates of the invention, the aryl groups may be aryl or an alkyl substituted aryl group thus alkaryl groups. Preferably, the aryl groups are independently selected from cresyl, phenyl, xylyl, propylphenyl and butylphenyl groups. The arylene group is derived from a dihydric compound and is preferably resorcinol, hydroquinone or bisphenol-A. The aryl groups (R₁, R₂, R₃, and R₄) are preferably phenyl. In the case of the low molecular weight phosphates, the more preferred low molecular weight phosphate is bisphenol-A tetraphenyl diphosphate wherein n is 1, m is 1, X is bisphenol-A and the R's are phenyl.

The amount of phosphate employed can be that amount of phosphate which renders the thermoplastic molding resin composition flame retardant while maintaining good properties of heat deflection temperature, impact resistance and flow while preferably avoiding edge cracking of the molded thermoplastic composition. Preferably the composition of the invention contains less than about 8 weight percent of the phosphate flame retardant based on the total weight of thermoplastic resin and phosphate flame retardant and more preferably less than about 7 weight percent thereof and most preferably less than about 6 weight percent with the preferred range being between about 3 and about 8 weight percent thereof.

In the practice of the invention, the thermoplastic resin employed herein is a blend of aromatic polycarbonates and monovinylidene aromatic compounds. The polycarbonate materials are well known in the art and are usually prepared by interfacial or melt polymerization and typically comprise structural units of the formula (II): 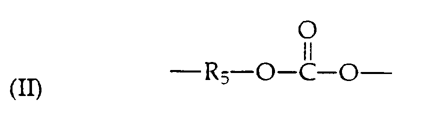 wherein R⁵ is a divalent organic radical.

Preferably, at least about 60% and more preferably at least about 80% of the total number of R⁵ values, and most desirably all of said R⁵ values, are aromatic. The aromatic R⁵ radicals preferable have the formula (III):

-A¹-Y-A²- (III)

wherein each of A¹ and A² is a monocyclic divalent aromatic radical and Y is a bridging radical in which one or two atoms separate A¹ from A². The free valence bonds in formula (III) are usually in the meta or para positions of A¹ and A² in relation to Y.

In formula (III), the A¹ and A² values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both A¹ and A² are preferably p-phenylene, although both may be o-phenylene or m-phenylene, or one o-phenylene or m-phenylene and the other p-phenylene.

The bridging radical, Y, is one in which one or two atoms, preferable one, separate A¹ from A². It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gem-alkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone. For reasons of availability and particular suitability for the purposes of this invention, the preferred radical of formula (III) is the 2,2-bis(4-phenylene)propane radical, which is derived from bisphenol A and in which Y is isopropylidene and A¹ and A² are each p-phenylene.

The weight average molecular weight of the polycarbonate material is well known to those skilled in the art but is preferably relatively low for purposes of this invention. In particular, it is preferred that the weight average molecular weight is less than about 30,000, more preferably less than about 27,500 and most preferably less than about 25,000 (as determined by gel permeation chromatography in methylene chloride relative to polystyrene). However, compositions in which the polycarbonate has a higher molecular weight often have favorable ductility at the expense of decreased flow. The exact molecular weight utilized will depend, in part, on the end-use requirements of the desired application and the degree of molding difficulty encountered in forming the part.

In most instances, the polycarbonate material consists of a homopolycarbonate or even a copolycarbonate, such as a copoly(ester carbonate). It is also within the scope of the invention, however, to use a blend of a polycarbonate material with another material, e.g., a styrene homopolymer.

The monovinylidene aromatic compound of the present invention is well known to those skilled in the art and is typically a rubber modified monovinylidene aromatic resin comprising (a) a rubber modified monovinylidene aromatic graft copolymer and (b) an ungrafted rigid copolymer. These compounds are generally prepared by graft polymerization of a mixture of a monovinylidene aromatic monomer and one or more comonomers in the presence of one or more rubbery polymeric substrates. Depending on the amount of rubber present, a separate matrix or continuous rigid phase of ungrafted rigid (co)polymer may be simultaneously obtained along with the rubber modified monovinylidene aromatic graft polymer. The resins may also be produced by blending a rigid monovinylidene aromatic copolymer with one or more rubber modified monovinylidene aromatic graft copolymers.

Monovinylidene aromatic monomers which may be employed include styrene; α-methyl styrene; halostyrenes such as dibromostyrene; mono or di alkyl, alkoxy or hydroxy substituted groups on the nuclear ring of the monovinylidene aromatic monomer, i.e., vinyl toluene, vinylxylene, butylstyrene, para-hydroxystyrene or methoxystyrene; or mixtures of the foregoing. The monovinylidene aromatic monomers utilized are generically described by the following formula (IV): 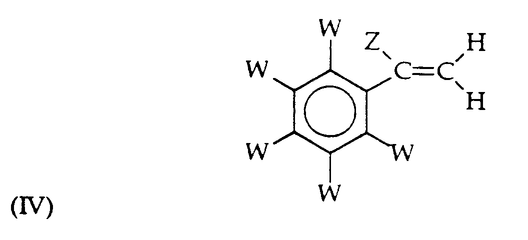 wherein Z is selected from the group consisting of hydrogen, alkyl groups of 1 to 5 carbon atoms, cycloalkyl, aryl, alkaryl, aralkyl, alkoxy, aryloxy, and halogens. Each W is independently selected from the group consisting of hydrogen, alkyl groups of 1 to 5 carbon atoms and halogens such as bromine and chlorine. Examples of substituted vinylaromatic compounds include styrene, 3,5-diethylstyrene, 4-n-propylstyrene, 4-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers are styrene and/or α-methylstyrene.

Comonomers which may be used with the monovinylidene aromatic monomer includes acrylonitrile; methacrylonitrile; C₁ to C₈ alkyl or aryl substituted acrylate; C₁ to C₈ alkyl, aryl or haloaryl substituted methacrylate; acrylic acid; methacrylic acid; itaconic acid; acrylamide; N-substituted acrylamide or methacrylamide; maleic anhydride; maleimide; N-alkyl, aryl or haloaryl substituted maleimide; glycidyl (meth)acrylates; hydroxy alkyl (meth)acrylates; or mixtures of any of the foregoing. The acrylonitrile, substituted acrylonitrile, or acrylic acid esters are described generically by the following formula (V): 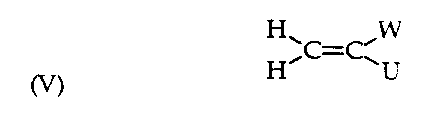 wherein W may be selected from the same group as previously set out in formula (IV) and U is selected from the group consisting of cyano and alkyl carboxylate groups wherein the alkyl group of the alkyl carboxylate contains from one or about twelve carbon atoms. Examples of such monomers include acrylonitrile, ethacrylonitrile, methacrylonitrile, α-chloroacrylonitrile, β-chloroacrylonitrile, α-bromoacrylonitrile, methyl acrylate, methyl methacrylate, ethyl acrylate, butyl acrylate, propylacrylate, isopropyl acrylate and mixtures thereof. The preferred monomer is acrylonitrile and the preferred acrylic acid esters are ethyl acrylate and methyl methacrylate. It is also preferred that the acrylic acid esters, when included, are employed in combination with acrylonitrile.

For high rubber graft emulsion resins, the rubber level will range up to about 80% and typically from about 40 to about 70% by weight based on the total weight of the rubber modified resin. For mass polymerization, the rubber level ranges from 4 to 40% by weight based on the total weight of the rubber modified resin.

Examples of rubbery polymers for the substrate include: conjugated dienes, copolymers of a diene with styrene, acrylonitrile, methacrylonitrile, or a C₁ to C₈ alkyl acrylate which contain at least 50% (preferably at least 65% by weight) conjugated dienes, polyisoprene or mixtures thereof; olefin rubbers i.e., ethylene propylene copolymer (EPR) or ethylene propylene non-conjugated diene (EPDM); silicone rubbers; or C₁ or C₈ alkyl acrylate homopolymers or copolymers with butadiene and/or styrene as well as mixtures of the foregoing rubbery polymers. The acrylic polymer may also contain up to 5% of one or more polyfunctional crosslinking agents such as alkylenediol di(meth)acrylates, alkylenetriol tri(meth)acrylates, polyester di(meth)acrylates, divinylbenzene, trivinylbenzene, butadiene, isoprene and optionally, graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of comonomers such as styrene, acrylonitrile, methylmethacrylate or C₁-C₆-alkylacrylate which are produced by aqueous radical emulsion polymerization. The acrylate rubbers may be cross-linked, particulate emulsion copolymers substantially of C₁-C₈-alkylacrylate, in particular C₂-C₆-alkylacrylate, optionally, in admixture with up to 15% by weight of comonomers such as styrene, methylmethacrylate, butadiene, vinyl methyl ether or acrylonitrile and optionally, up to 5% by weight of a polyfunctional crosslinking comonomer, e.g. divinylbenzene, glycol-bis-acrylates, bisacrylamides, phosphoric acid triallylester, citric acid triallylester, allylesters of acrylic acid or methacrylic acid, triallylcyanurate, and triallylisocyanurate. Also suitable are mixtures of diene and alkylacrylate rubbers and rubbers which have a so-called core/sheath structure, e.g. a core of diene rubber and a sheath of acrylate or vice versa. Furthermore, the rubbery polymeric substrate portion should exhibit a glass transition temperature (Tg) of less than about 0°C. Polybutadiene, however, represents the preferred rubber material. And, in some cases, it is preferred that the rubber substrate consist essentially of polybutadiene, i.e., there is no additional acrylate rubber as a substrate material.

Preferred graft superstrates include copolymers of styrene and acrylonitrile, copolymers of α-methylstyrene and acrylonitrile and methylmethacrylate polymers or copolymers with up to 50% by weight of C₁-C₆ alkylacrylates, acrylonitrile or styrene. Specific examples of monovinylidene aromatic graft copolymers include but are not limited to the following: acrylonitrile-butadiene-styrene (ABS), acrylonitrile-styrene-butyl acrylate (ASA), methylmethacrylate-acrylonitrile-butadiene-styrene (MABS), acrylonitrile-ethylen-propylene-non-conjugated diene-styrene (AES).

The ungrafted rigid polymers (typically free of rubber) are resinous, thermoplastic polymers of styrene, α-methylstyrene, styrenes substituted in the nucleus such as p-methylstyrene, methyl acrylate, methylmethacrylate, acrylonitrile, methacrylonitrile, maleic acid anhydride, N-substituted maleimide, vinyl acetate or mixtures thereof. Styrene/acrylonitrile copolymers, α-methylstyrene/acrylonitrile copolymers and methylmethacrylate/acrylonitrile copolymers are preferred. The ungrafted rigid copolymers are known and may be prepared by radical polymerization, in particular by emulsion, suspension, solution or bulk polymerization.

Ultimately, it is preferred that the monovinylidene aromatic compound comprises between about 10 and about 25% by weight of the overall composition comprising the polycarbonate, monovinylidene aromatic compound, flame retardant and optionally, tetrafluoroethylene polymer, with between about 12% and about 22% being more preferred, and between about 15 and about 20% by weight being most preferred. Additionally, it is also preferred that the rubber content in the monovinylidene aromatic compound be no greater than about 25 weight percent, more preferably no greater than about 20 weight percent, and most preferably no greater than about 15 weight percent. For this reason and others, it is preferred that the monovinylidene aromatic compound be prepared by bulk polymerization. It is also preferred that the overall rubber content in the entire composition be less than about 7 percent by weight, more preferably less than about 5 percent by weight and most preferably less than about 3 percent by weight.

The compositions of the invention optionally contain a tetrafluoroethylene polymer. Suitable tetrafluoroethylene polymers for use in this invention typically have a fibril structure which tends to stabilize the polymer under molten conditions. The tetrafluoroethylene polymers are commercially available or can be prepared by conventional means. They are normally solids which are obtained, for example, by polymerizing tetrafluorethylene in aqueous media in the presence of a free radical catalyst at a pressure of from about 100 to about 1,000 psi and at a temperature of from about 0°C to about 200°C. The tetrafluoroethylene polymers can be added to the thermoplastic resin composition in any manner known to the skilled artisan including addition as a direct solid, addition as a concentrate with a resin such as polycarbonate or SAN, or addition as aqueous tetrafluoroethylene polymer. Tetrafluoroethylene polymers are also referred to as PTFE and are generally disclosed in U.S. Pat. Nos. 3,005,795, 3,671,487 and 4,463,130 which are each incorporated herein by reference.

The amount of tetrafluoroethylene polymer usually ranges from about 0.01 to about 3 percent by weight, and more preferably from about 0.1 to about 0.5 percent by weight based on the entire composition.

The composition of the present invention may also contain fillers and/or reinforcing fillers. The non-fibrous fillers are mineral components that can be selected, for instance, from among talcs, clays, micas, metal sulfates, calcium carbonates and various silicates. These minerals typically have a small average particle size, generally under 40 microns in size, preferably under 20 microns and most preferably under 15 microns. The minerals may be used alone or as a mixture of minerals. The minerals may also contain various surface treatments. Fine particle talcs having an average particle sizes under 20 microns are the preferred minerals.

In addition, other additives may be employed with the composition of this invention such as other flame retardant enhancing additives, plasticizers, light and heat stabilizer, processing aides, impact modifiers, mold release agents, etc.

### DETAILED DESCRIPTION OF THE PREFERRED EMBODIMENTS

The following Examples are provided to illustrate various embodiments of this invention. The Examples are for the purpose of illustration only, and should not be regarded as limiting the invention to any of the specific materials or conditions described therein.

### EXAMPLE 1

The materials employed in this Example as components parts (measured in parts by weight) were as follows:
- PC-1: an aromatic polycarbonate derived from bisphenol-A and a carbonyl chloride (phosgene) having a weight average molecular weight (Mw) of about 22,000.
- PC-2: an aromatic polycarbonate derived from bisphenol-A and a carbonyl chloride (phosgene) having a weight average molecular weight (Mw) of about 24,000.
- PC-3: an aromatic polycarbonate derived from bisphenol-A and a carbonyl chloride (phosgene) having a weight average molecular weight (Mw) of about 27,000.
- HRG: a high rubber graft copolymer prepared by grafting a styrene-acrylonitrile onto a butadiene rubber in a 50/50 weight ratio.
- SAN: styrene-acrylonitrile copolymer (acrylonitrile to styrene ratio of 25:75, weight to weight), with a weight average molecular weight (Mw) of about 97,000.
- BDT: bulk butadiene-acrylonitrile-styrene copolymer having a butadiene content of 11% by weight and a SAN weight average molecular weight (Mw) of about 150,000 available from General Electric Co. under the trademark CYCOLAC as grade BDT6500.
- RDP: a mixture of several aromatic oligomeric diphosphates based on resorcinol available from Akzo Chemicals under the trademark FYROFLEX RDP.
- PTFE: polytetraflouroethylene, in latex form, available from DuPont as aqueous latex under the trademark TEFLON 30, or in a polycarbonate concentrate (PTFE conc.) at a 20% by weight loading of polytetraflouroethylene.
- Kaolin: clay available from Huber Co. as grade HG90.

All blends were prepared on a twin screw extruder at approximately 480° F melt temperature. ASTM parts were all injection molded at approximately 450 °F melt temperature. Testing of physical and mechanical properties such as notched Izod impact (NII) and HDT were performed according to ASTM standards on molded specimens having a thickness of about 1/8". Melt viscosity (mv) was determined at 2000 reciprocal seconds shear rate, which is an indicator of flowability of the resin at real injection molding conditions, using a capillary rheometer (die diameter = 1 mm, L/D = 30) at about 260°C. All materials were dried in an oven at 80°C for about 4 hours prior to viscosity measurement. Environmental stress crack resistance (ESCR) tests were performed at 25°C, 50% humidity on a 0.75% strain jig with RDP as the attacking chemical agent on a 0.125 in thick ASTM tensile bar. Flammability was determined in accordance with Underwriters Laboratory Bulletin UL94 flammability rating V0, V1 and V2.

**Table I**

| **Composition** | **1** | **2** | **3** | **4** | **5** | **6** | **7** | **8** | **9** |
|---|---|---|---|---|---|---|---|---|---|
| PC-1 | 0 | 0 | 0 | 0 | 75 | 0 | 70 | 0 | 0 |
| PC-2 | 75 | 75 | 75 | 72 | 0 | 0 | 0 | 0 | 26 |
| PC-3 | 0 | 0 | 0 | 0 | 0 | 80 | 0 | 70 | 50 |
| HRG | 4 | 0 | 0 | 5 | 0 | 9 | 8 | 8 | 4 |
| SAN | 14 | 0 | 0 | 12 | 0 | 8.5 | 2.5 | 2.5 | 14 |
| BDT | 0 | 18 | 18 | 0 | 18 | 0 | 0 | 0 | 0 |
| RDP | 4.5 | 4.5 | 6.0 | 5.0 | 6.0 | 11.5 | 8.0 | 8.0 | 4.0 |
| PTFE conc. | 0.65 | 0.65 | 1.0 | 1.0 | 1.0 | 1.0 | 1.0 | 1.0 | 0.65 |
| Kaolin | 0 | 0 | 0 | 5 | 0 | 0 | 0 | 0 | 0 |
| **Overall rubber content (Wt. %)** | 2.0 | 2.0 | 2.0 | 2.5 | 2.0 | 4.5 | 4.0 | 4.0 | 2.0 |

**Table II**

| **Composition Properties** | | **1** | **2** | **3** | **4** | **5** | **6** | **7** | **8** | **9** |
|---|---|---|---|---|---|---|---|---|---|---|
| NII, ft-lb/in | | 9 | 11 | 10 | 4 | 3 | 8 | 8 | 9 | 12 |
| HDT, 264 psi, °C | | 100 | 100 | 97 | 100 | 97 | 74 | 85 | 85 | 100 |
| MV, (pa s) | | 159 | 154 | 144 | -- | -- | 128 | 153 | 182 | -- |
| UL94, V1/1.6mm | | pass | pass | -- | -- | -- | -- | -- | -- | -- |
| UL94, V0 /1.6mm | | -- | -- | pass | pass | pass | pass | pass | pass | pass |
| UL94, V0/2.0mm | | pass | pass | -- | pass | -- | -- | -- | -- | -- |
| UL94 5VB/2.3mm | | | | pass | -- | -- | pass | pass | pass | -- |
| ESCR, | 12 hrs | ok | ok | ok | ok | ok | ok | cracks | ok | ok |
| | 48 hrs | ok | ok | ok | ok | ok | cracks | -- | cracks | ok |
| | 2 wks | ok | ok | ok | ok | ok | -- | -- | -- | ok |
| | 4 wks | ok | ok | ok | ok | cracks | -- | -- | | ok |

A comparison of Compositions 1-5 and 9 with Compositions 6-8 shows that there is a surprising improvement in ESCR cracking resistance when a combination of low flame retardant loading and low rubber loading was utilized.

A comparison of Compositions 1-5 and 9 with Compositions 6-8 also showed an unexpectedly improved heat resistance (HDT) for flame resistant PC/ABS compositions when a low flame retardant loading was combined with a low rubber loading.

Excellent flowability was achieved when a relatively low molecular weight polycarbonate and a high SAN loading was formulated in FR PC/ABS compositions. The use of relatively low molecular weight polycarbonate without risking edge-cracking was made possible only when a low flame retardant loading and low rubber loading was adopted. Although flame resistant PC/ABS compositions containing higher molecular weight polycarbonate had better edge-cracking resistance (Compositions 6, 8 and 9 vs. Composition 7), the low flame retardant and rubber loading combination improved the cracking resistance so much that the lower molecular weight polycarbonate Compositions 1-5 outperformed compositions 6-8 in cracking tests.

Flame resistant PC/ABS compositions containing a combination of HRG and SAN (Composition 1) or a bulk-ABS (Composition 2) gives similar performance in flame retardance, flowability, and mechanical properties.

The low rubber loading and low flame retardant loading resulted in flame resistant PC/ABS compositions with such robustness in edge-cracking resistance that even mineral filled flame resistant PC/ABS (Composition 4) showed excellent cracking resistance. This was particularly surprising as mineral fillers are considered as impurities and can cause polycarbonate to degrade and thus make flame resistant PC/ABS compositions even more vulnerable to edge-cracking. Not surprising, however, was the fact that the mineral filler did cause a decrease in impact (Composition 4) when compared with similar compositions which were unfilled (Compositions 1-3).

Flame resistant PC/ABS compositions with a fine balance of flame retardance, flowability, high heat resistance, cracking resistance, and mechanical properties such as impact strength were achieved by using a combination of relatively low molecular weight PC, high SAN loading and low flame retardant and low rubber loadings in the flame resistant PC/ABS formulations.

All factors affecting properties mentioned above are closely interrelated and the fine balance of properties could be obtained within limited composition ranges of each blend ingredient. For example, by lowering the overall rubber content, and more particularly the soap or other impurities associated with increasing rubber contents, and/or by lowering the amount of flame retardant in Compositions 6-8, it would be possible to achieve significant increases in stress crack resistance, HDT, and/or impact (see Composition 9).

While variations of this invention will be suggested to those skilled in the art, in view of the above disclosure, any such variations are intended to be within the scope of the claims appended hereto.

## Claims

**1.** A flame resistant thermoplastic resin composition comprising:
(A) from about 60 to about 85 parts by weight of polycarbonate resin;
(B) from about 10 to about 25 parts by weight monovinylidene aromatic compounds with an average rubber content less than about 25 percent by weight based on the weight of the monovinylidene aromatic compounds;
(C) less than about 8 percent phosphate flame retardant compounds; and
(D) from 0 to about 3 % of a tetrafluoroethylene polymer.

**2.** The composition of Claim 1, wherein the overall rubber content in thermoplastic resin composition is no greater than about 5% by weight of the entire thermoplastic composition.

**3.** The composition of Claim 1, wherein said thermoplastic composition has a UL 94 flame rating of V0 at 3.2 mm.

**4.** The composition of Claim 3, wherein a 0.125 inch bar of said thermoplastic composition has a notched Izod impact value of at least about 4 ft-lbs/in.

**5.** The composition of Claim 3, wherein a 0.125 inch tensile bar of said thermoplastic composition does not undergo visible edge cracking after 12 hours on a 0.75% strain jig at 50% humidity and 25°C wherein resorcinol diphosphate is applied to the surface of said tensile bar.

**6.** The composition of Claim 1, wherein said monovinylidene aromatic compounds are selected from the group consisting of acrylonitrile-butadiene-styrene, acrylonitrile-styrene-butyl acrylate, methylmethacrylate-acrylonitrile-butadiene-styrene, acrylonitrile-ethylene-propylene-non-conjugated diene-styrene, and mixtures thereof.

**7.** The composition of claim 1 wherein said phosphate flame retardant has the formula: 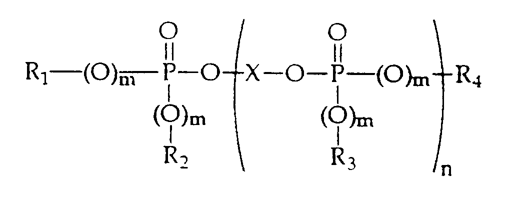 wherein R₁, R₂, R₃, and R₄ are independently selected from the group consisting of an aryl or an alkaryl group; X is an arylene group; each m is independently 0 or 1 and n is an integer or mixture of integers of from 1 to about 35.

**8.** The composition of Claim 7, wherein n in said phosphate flame retardant is an integer or mixture of integers of from 1 to about 5.

**14.** The composition of Claim 1, wherein said composition is free of halogenated flame retardants.

**9.** The composition of Claim 1, wherein the weight average molecular weight of said polycarbonate resin is less than about 30,000 as determined by gel permeation chromatography in methylene chloride.

**10.** The composition of Claim 1, wherein the heat distortion temperature of a 0.125 inch bar of said thermoplastic resin composition at 264 psi is greater than about 85°C.
